# EUROPEAN PATENT APPLICATION

(11) **EP 4 329 182 A1**
(43) Date of publication of application: **28.02.2024**
(21) Application number: 22306252.2
(22) Date of filing: 25.08.2022
(51) Int. Cl.: H02M 7/483, H02M 1/00

(54) **A THREE-PHASE INVERTER WITH ASYMMETRIC LINEAR AMPLIFIERS**

(71) Applicant: Mitsubishi Electric R & D Centre Europe B.V., 1119 NS Schiphol Rijk (NL); MITSUBISHI ELECTRIC CORPORATION, Chiyoda-ku Tokyo 100-8310 (JP)
(72) Inventor: REGNAT, Guillaume, 35700 RENNES (FR)
(74) Representative: Cabinet Le Guen Maillet

(57) **Abstract**

The present invention concerns a three-phase inverter for providing electric energy to an electrical grid. The three-phase inverter is composed of a first and a second linear amplifiers, the first linear amplifier is composed of at least two transistors of the same type, the second linear amplifier is composed of at least two amplifiers of the same type and different of the type of transistors of the first linear amplifier, a three-phase unfolder circuit that transforms the signals provided by the linear amplifiers into sinusoidal waveforms to be injected into the electrical grid and a first and a second current control modules, the first current control module providing a first signal to each transistor of the first linear amplifier and the second current control module providing a second signal to each transistor of the second linear amplifier.

## Description

### TECHNICAL FIELD

The present invention relates generally to a three-phase inverter with asymmetric linear amplifier.

### RELATED ART

Switch mode inverters are classically used for providing electric energy to electrical grid. An electrical grid is an interconnected network for electricity delivery from producers to consumers.

The main problem of switch mode inverters it that they require bulky magnetic components, like for example transformer or inductance or EMI filters in order to reject noise generated by the inverters switching.

The purpose of the present invention is to propose a filter-less output voltage three-phase inverter in contrary to switch mode inverter which always requires a bulky output filter. The present invention aims also to provide a three-phase inverter which is composed of a limited number of components.

### SUMMARY OF THE INVENTION

The present invention aims to propose a new topology of circuit.

The present invention concerns a three-phase inverter for providing electric energy to an electrical grid, characterized in that the three-phase inverter is composed of a first and a second linear amplifiers, the first linear amplifier being composed of at least two transistors of the same type, the second linear amplifier is composed of at least two amplifiers of the same type and different from the type of transistors of the first linear amplifier, a three-phase unfolder circuit that transforms the signals provided by the linear amplifiers into sinusoidal waveforms to be injected into the electrical grid and a first and a second current control modules, the first current control module providing a first signal to each transistor of the first linear amplifier, the first signal being identical for each transistor of the first linear amplifier, the second current control module providing a second signal to each transistor of the second linear amplifier, the second signal being identical for each transistor of the second linear amplifier.

Thus, a three-phase current is created with only two linear amplifiers and no output filter is required.

According to a particular feature, the first current generation module generates a reference the shape of which is at any time equal to the maximum value among the value of the voltage between the phase A and the neutral point, the value of the voltage between the phase B and the neutral point and the value of the voltage between the phase C and the neutral point.

Thus, a reference is created for the first linear amplifier.

According to a particular feature, the second current generation module generates a reference the shape of which is at any time equal to the minimum value among the value of the voltage between the phase A and the neutral point, the value of the voltage between the phase B and the neutral point and the value of the voltage between the phase C and the neutral point.

Thus, a reference is created for the second linear amplifier.

According to a particular feature, the transistors of the first linear amplifier are N type semiconductors.

According to a particular feature, each transistor of the first linear amplifier is in an OFF state or in a linear amplification state or in an ON state and only one transistor among the plural transistors of the first linear amplifier is in the linear amplification state during at least one period of time of the signal provided by the positive current reference module.

Thus, high efficiency is achieved for the first linear amplifier.

According to a particular feature, the transistors of the second linear amplifier are P type semiconductors.

According to a particular feature, each transistor of the second linear amplifier is in an OFF state or in a linear amplification state or in an ON state and only one transistor among the plural transistors of the second linear amplifier is in the linear amplification state during at least one period of time of the period of the full wave rectified sinus signal.

Thus, high efficiency is achieved for the second linear amplifier.

According to a particular feature, the linear amplifiers comprise the same number of DC voltage sources as the number of transistors.

### BRIEF DESCRIPTION OF THE DRAWINGS

The characteristics of the invention will emerge more clearly from a reading of the following description of example embodiments, the said description being produced with reference to the accompanying drawings, among which:
Fig. 1 represents an example of architecture of a three-phase inverter which comprises asymmetric linear amplifiers;
Fig. 2 represents an example of architecture of a positive asymmetric linear amplifier;
Fig. 3 represents an example of architecture of a negative asymmetric linear amplifier;
Fig. 4 represents an example of architecture of a three-phase unfolder module;
Fig. 5 represents an example of a positive current control module;
Fig. 6 represents an example of a negative current control module;
Fig. 7 represents different voltages and currents in the three-phase inverter which comprises asymmetric linear amplifiers;
Fig. 8a represents different voltages at the unput and output of the three-phase unfolder module;
Fig. 8b represents the different states of the switches of the three-phase unfolder module.

### DESCRIPTION

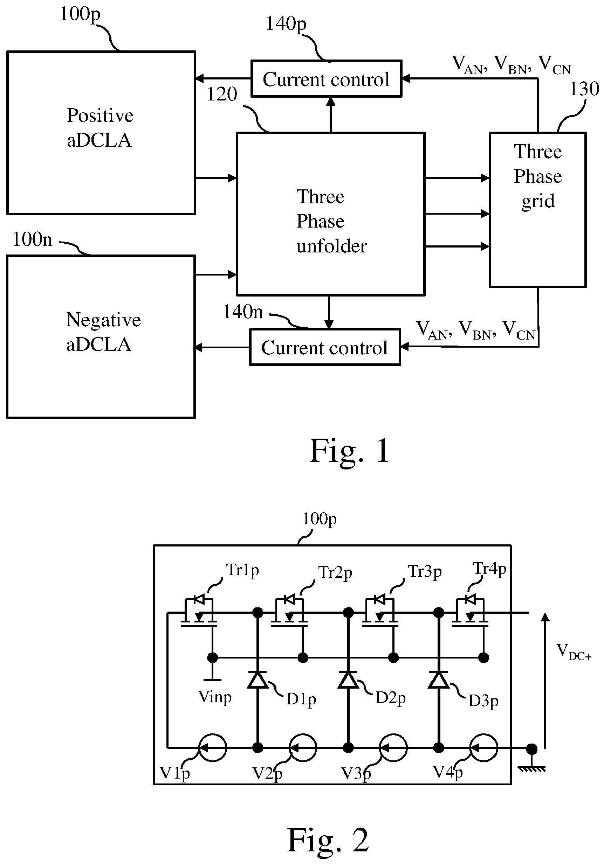

**Fig. 1** represents an example of architecture of a three-phase inverter which comprises asymmetric linear amplifiers according to the present invention.

The three-phase inverter which comprises asymmetric linear amplifiers is composed of a positive asymmetric linear amplifier 100p, a negative asymmetric linear amplifier 100n, a three-phase unfolder module 120 that provides current to a three-phase grid 130, a positive current control circuit 140p and a negative current control circuit 140n.

An example of realization of the positive asymmetric linear amplifier lOOp is given in reference to Fig. 2.

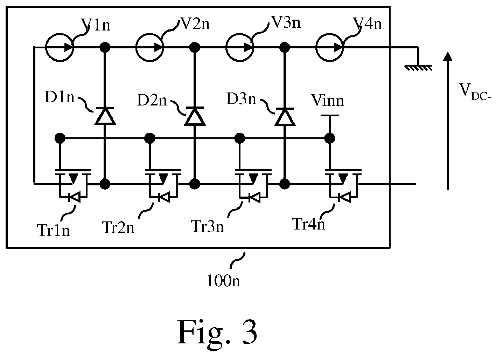

An example of realization of the negative asymmetric linear amplifier lOOn is given in reference to Fig. 3.

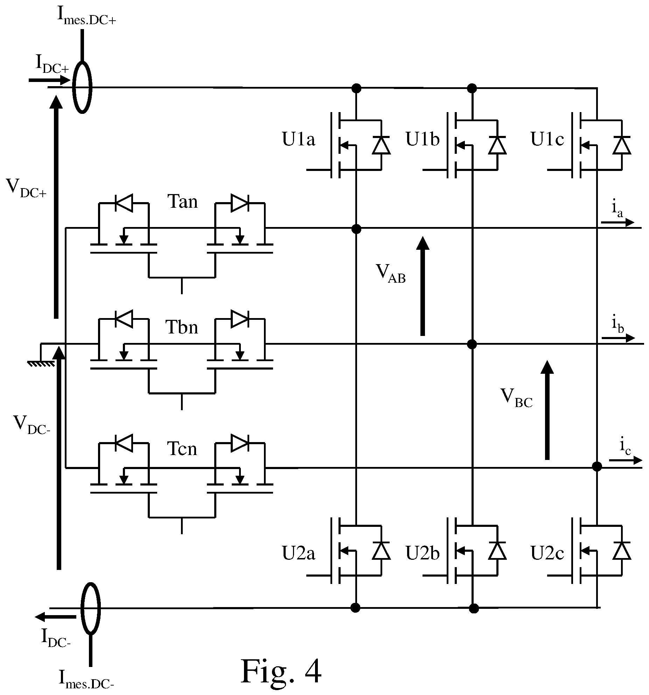

An example of realization of the three-phase unfolder module 120 is given in reference to Fig. 4.

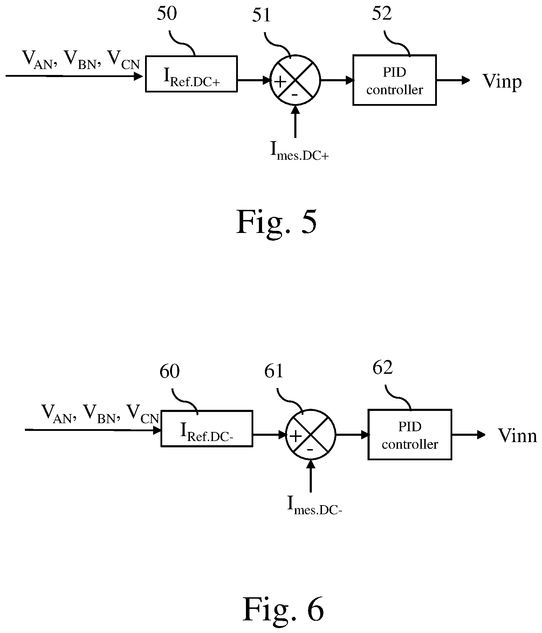

An example of realization of the positive current control circuit 140p is given in reference to Fig. 5.

An example of realization of the negative current control circuit 140n is given in reference to Fig. 6.

**Fig. 2** represents an example of architecture of a positive asymmetric linear amplifier.

The positive asymmetric linear amplifier lOOp is composed of at least two transistors the gates of which are driven by a same positive signal Vinp. In the example of Fig. 2, the asymmetric linear amplifier lOOp comprises four transistors Tr1p, Tr2p, Tr3p and T4p, three diodes D1p, D2p and D3p and four DC voltage sources V1p, V2p, V3p and V4p.

Less or more transistors may be used in the positive asymmetric linear amplifier.

The transistors are for example N type MOSFET transistors.

The same signal Vinp applies to each gate of the transistors Tr1p to Tr4p.

The drain of the transistor Tr1p is connected to a first terminal of the DC voltage source V1p.

The source of the transistor Tr1p is connected to a cathode of the diode D1p, the anode of which is connected to a second terminal of the DC voltage source V1p and to a first terminal of the DC voltage source V2p.

The voltage between the second terminal of the DC voltage source V1p and the first terminal of the DC voltage source V1p is positive.

The drain of the transistor Tr2p is connected to the source of the transistor Tr1p and to the cathode of the diode D1p.

The source of the transistor Tr2p is connected to a cathode of the diode D2p, the anode of which is connected to a second terminal of the DC voltage source V2p and to a first terminal of the DC voltage source V3p.

The voltage between the second terminal of the DC voltage source V2p and the first terminal of the DC voltage source V2p is positive.

The drain of the transistor Tr3p is connected to the source of the transistor Tr2p and to the cathode of the diode D2p.

The source of the transistor Tr3p is connected to a cathode of the diode D3p, the anode of which is connected to a second terminal of the DC voltage source V3p and to a first terminal of the DC voltage source V4p.

The voltage between the second terminal of the DC voltage source V3p and the first terminal of the DC voltage source V3p is positive.

The drain of the transistor Tr4p is connected to the source of the transistor T3p and to the cathode of the diode D3p.

The source of the transistor Tr4p is connected to a first terminal of the three-phase unfolder module 120.

The second terminal of the DC voltage source V4p is connected to a neutral point.

The neutral point is the middle point of the DC bus voltage (Vbus = V_{DC+} + V_{DC-}). In some applications, the neutral point is connected to the ground.

The voltage between the second terminal of the DC voltage source V4p and the first terminal of the DC voltage source V3p is positive.

Preferably, the voltage provided by each DC voltage source V1p to V4p is identical and is equal to Vdc/4, where Vdc is for example equal to 300 Volts.

In a variant, the voltage provided by each DC voltage source V1p to V4p is different.

**Fig. 3** represents an example of architecture of a negative asymmetric linear amplifier.

The negative asymmetric linear amplifier lOOn is composed of at least two transistors the gates of which are driven by a same negative signal Vinn. In the example of Fig. 3, the asymmetric linear amplifier 100n comprises four transistors Trln, Tr2n, Tr3n and T4n, three diodes D1n, D2n and D3n and four DC voltage sources V1n, V2n, V3n and V4n.

Less or more transistors may be used in the positive asymmetric linear amplifier.

The transistors are for example P type MOSFET transistors.

The same signal Vinn applied to each gate of the transistors Tr1n to Tr4n.

The source of the transistor Tr1n is connected to a first terminal of the DC voltage source V1n.

The drain of the transistor Tr1n is connected to an anode of the diode D1n, the cathode of which is connected to a second terminal of the DC voltage source V1n and to a first terminal of the DC voltage source V2n.

The voltage between the second terminal of the DC voltage source V1n and the first terminal of the DC voltage source V1n is negative.

The source of the transistor Tr2n is connected to the drain of the transistor Tr1n and to the anode of the diode D1n.

The drain of the transistor Tr2n is connected to an anode of the diode D2n, the cathode of which is connected to a second terminal of the DC voltage source V2n and to a first terminal of the DC voltage source V3n.

The voltage between the second terminal of the DC voltage source V2n and the first terminal of the DC voltage source V2n is negative.

The source of the transistor Tr3n is connected to the drain of the transistor Tr2n and to the anode of the diode D2n.

The drain of the transistor Tr3n is connected to an anode of the diode D3n, the cathode of which is connected to a second terminal of the DC voltage source V3n and to a first terminal of the DC voltage source V4n.

The voltage between the second terminal of the DC voltage source V3n and the first terminal of the DC voltage source V3n is negative.

The source of the transistor Tr4n is connected to the drain of the transistor T3n and to the anode of the diode D3.

The drain of the transistor Tr4n is connected to a second terminal of the three-phase unfolder module 120.

The second terminal of the DC voltage source V4n is connected to the neutral point.

The voltage between the second terminal of the DC voltage source V4n and the first terminal of the DC voltage source V3n is negative.

Preferably, the voltage provided by each DC voltage source V1n to V4n is identical and is equal to -Vdc/4, where Vdc is for example equal to 300 Volts.

In a variant, the voltage provided by each DC voltage source V1n to V4n is different.

The **Fig. 4** represents an example of architecture of a three-phase unfolder module.

The three-phase unfolder module is composed of nine switches noted Tan, Tbn, Tcn, U1a, U1b U1c, U2a, U2b and U2c.

For example, the switches Tan, Tbn and Tcn are switches with bidirectional voltage and current capability (for example, back-to-back connected N-MOSFETs in common source or common drain configuration, back-to-back connected IGBT with anti-parallel diode in common emitter or common collector configuration).

For example, the switches U1a, U1b U1c, U2a, U2b and U2c are switches with bidirectional current capability (for example, N-MOSFET or IGBT with anti-parallel diode).

The first terminal of the switches Tan, Tbn and Tcn are connected to the neutral point.

The second terminal of the switch Tan is connected to a first terminal of the switch U1a, to a first terminal of the switch U2a and to a first phase noted A of the three-phase electrical grid.

The second terminal of the switch Tbn is connected to a first terminal of the switch U1b to a first terminal of the switch U2b and to a second phase noted B of the three-phase electrical grid.

The second terminal of the switch Tcn is connected to a first terminal of the switch U1c to a first terminal of the switch U2c and to a third phase noted C of the three-phase electrical grid.

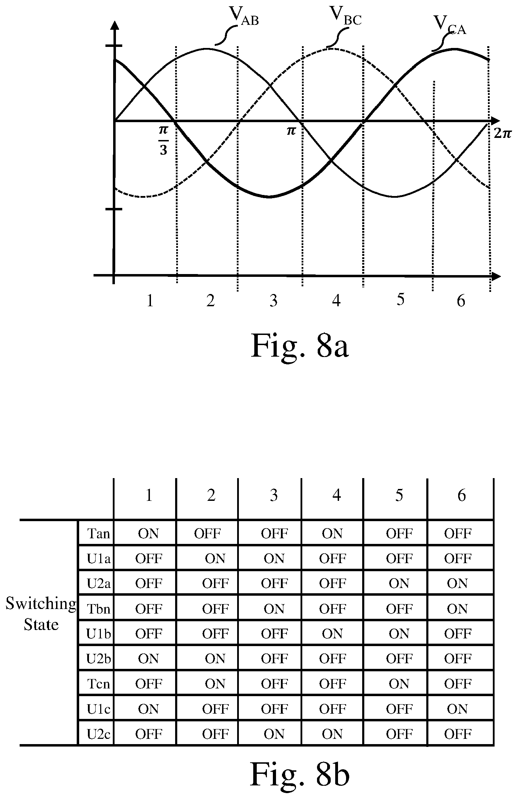

The opening or closing states of the switches Tan, Tbn, Tcn, U1a, U1b U1c, U2a, U2b and U2c will be disclosed in reference to Fig. 8b.

The second terminals of the switches U1a, U1b and U1c are connected to the first terminal of the three-phase unfolder module 120.

The second terminals of the switches U2a, U2b and U2c are connected to the second terminal of the three-phase unfolder module 120.

The **Fig. 5** represents an example of a positive current control module.

The positive current control module is composed of a reference DC+ current generation module 50, a subtracting module 51 and a Proportional Integral derivative module 52.

The reference DC+ current generation module 50 generates from the voltage between the phase A and the neutral point, the voltage between the phase B and the neutral point, the voltage between the phase C and the neutral point, a reference DC+ current.

Considering that the voltage and the current in the first phase A having no dephasing, that the voltage and the current in the second phase B having no dephasing and that the voltage and the current in the third phase C having no dephasing, the reference DC+ current generation module 50 generates a reference current I_{Ref.DC+} the shape of which is equal at any time to the maximum value among the value of the voltage V_{AN} between the phase A and the neutral point, the value of the voltage V_{BN} between the phase B and the neutral point and the value of the voltage V_{CN} between the phase C and the neutral point and the value of which is, if needed, further scaled in order to reach the desired current to be injected in the electrical grid 130.

The current I_{mes.DC+} measured in the first terminal of the three-phase unfolder module 120 is subtracted from the reference current I_{Ref.DC+} by the subtracting module 51 the output of which is provided to the Proportional Integral derivative module 52. The output of the Proportional Integral derivative module 52 is the positive input signal Vinp that is provided to the positive asymmetric linear amplifier 100p.

The **Fig. 6** represents an example of a negative current control module.

The negative current control module is composed of a reference DC- current generation module 60, a subtracting module 561 and a Proportional Integral derivative module 62.

The reference DC- current generation module 60 generates from the voltage between the phase A and the neutral point, the voltage between the phase B and the neutral point, the voltage between the phase C and the neutral point, the reference DC-current.

Considering that the voltage and the current in the first phase A having no dephasing, that the voltage and the current in the second phase B having no dephasing and that the voltage and the current in the third phase C having no dephasing, the reference DC- current generation module 60 generates a reference current I_{Ref.DC-} the shape of which is at any time equal to the minimum value among the value of the voltage V_{AN} between the phase A and the neutral point, the value of the voltage V_{BN} between the phase B and the neutral point and the value of the voltage V_{CN} between the phase C and the neutral point and the value of which is, if needed, further scaled in order to reach the desired current to be injected in the electrical grid 130.

The current I_{mes.DC-} measured in the second terminal of the three-phase unfolder module 120 is subtracted from the reference current I_{Ref.DC-} by the subtracting module 61 the output of which is provided to the Proportional Integral derivative module 62. The output of the Proportional Integral derivative module 62 is the negative input signal Vinn that is provided to the negative asymmetric linear amplifier 100n.

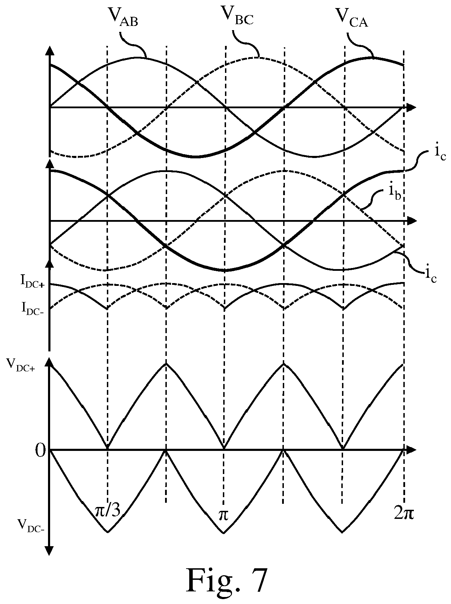

The **Fig. 7** represents different voltages and currents in the three-phase inverter which comprises asymmetric linear amplifiers.

The voltage between the first phase A and the second phase B is noted V_{AB}, the voltage between the second phase B and the third phase C is noted V_{BC} and the voltage between the third phase c and the first phase A is noted V_{CA}.

The current in the first phase A is noted iₐ, the current in the second phase B is noted i_{b} and the current in the third phase C is noted i_{c}.

The current I_{DC+} is the current in the first terminal of the three-phase unfolder module 120.

The current I_{DC-} is the current in the second terminal of the three-phase unfolder module 120.

The voltage between the first terminal of the three-phase unfolder module 120 and the neutral point is noted V_{DC+}.

The voltage between the second terminal of the first terminal of the three-phase unfolder module 120 and the neutral point is noted V_{DC-}.

The **Fig. 8a** represents different voltages at the output of the three-phase unfolder module.

The voltage between the first phase A and the second phase B is noted V_{AB}, the voltage between the second phase B and the third phase C is noted V_{BC} and the voltage between the third phase C and the first phase A is noted V_{CA}.

Six time spaces are shown in Fig. 8a, a first time space is noted 1, a second time space is noted 2, a third time space is noted 3, a fourth time space is noted 4, a fifth time space is noted 5 and a sixth time space is noted 6.

The **Fig. 8b** represents the different states of the switches of the three-phase unfolder module.

During the first time space 1, the switch Tan is conducting, the switch U1a is not conducting, the switch U2a is not conducting, the switch Tbn is not conducting, the switch U1b is not conducting, the switch U2b is conducting, the switch Tcn is not conducting, the switch U1c is conducting and the switch U2c is not conducting.

During the second time space 2, the switch Tan is not conducting, the switch U1a is conducting, the switch U2a is not conducting, the switch Tbn is not conducting, the switch U1b is not conducting, the switch U2b is conducting, the switch Tcn is conducting, the switch U1c is not conducting and the switch U2c is not conducting.

During the third time space 3, the switch Tan is not conducting, the switch U1a is conducting, the switch U2a is not conducting, the switch Tbn is conducting, the switch U1b is not conducting, the switch U2b is not conducting, the switch Tcn is not conducting, the switch U1c is not conducting and the switch U2c is conducting.

During the fourth time space 4, the switch Tan is conducting, the switch U1a is not conducting, the switch U2a is not conducting, the switch Tbn is not conducting, the switch U1b is conducting, the switch U2b is not conducting, the switch Tcn is not conducting, the switch U1c is not conducting and the switch U2c is conducting.

During the fifth time space 5, the switch Tan is not conducting, the switch U1a is not conducting, the switch U2a is conducting, the switch Tbn is not conducting, the switch U1b is conducting, the switch U2b is not conducting, the switch Tcn is conducting, the switch U1c is not conducting and the switch U2c is not conducting.

During the sixth time space 6, the switch Tan is not conducting, the switch U1a is not conducting, the switch U2a is conducting, the switch Tbn is conducting, the switch U1b is not conducting, the switch U2b is not conducting, the switch Tcn is not conducting, the switch U1c is conducting and the switch U2c is not conducting.

Naturally, many modifications can be made to the embodiments of the invention described above without departing from the scope of the present invention.

## Claims

1. A three-phase inverter for providing electric energy to an electrical grid, **characterized in that** the three-phase inverter is composed of a first and a second linear amplifiers, the first linear amplifier being composed of at least two transistors of the same type, the second linear amplifier is composed of at least two amplifiers of the same type and different of the type of transistors of the first linear amplifier, a three-phase unfolder circuit that transforms the signals provided by the linear amplifiers into sinusoidal waveforms to be injected into the electrical grid and a first and a second current control modules, the first current control module providing a first signal to each transistor of the first linear amplifier, the first signal being identical for each transistor of the first linear amplifier, the second current control module providing a second signal to each transistor of the second linear amplifier, the second signal being identical for each transistor of the second linear amplifier.

2. The three-phase inverter according to claim 1, **characterized in that** first current generation module generates a reference the shape of which is at any time equal to the maximum value among the value of the voltage between the phase A and the neutral point, the value of the voltage between the phase B and the neutral point and the value of the voltage between the phase C and the neutral point.

3. The three-phase inverter according to claim 1 or 2, **characterized in that** second current generation module generates a reference the shape of which is at any time equal to the minimum value among the value of the voltage between the phase A and the neutral point, the value of the voltage between the phase B and the neutral point and the value of the voltage between the phase C and the neutral point.

4. The three-phase inverter according to any of the claims 1 to 3, **characterized in that** the transistors of the first linear amplifier are N type semiconductors.

5. The three-phase inverter according to any of the claims 1 to 4, **characterized in that** each transistor of the first linear amplifier is in an OFF state or in a linear amplification state or in an ON state and only one transistor among the plural transistors of the first linear amplifier is in the linear amplification state during at least one period of time of the signal provided by the positive current reference module.

6. The three-phase inverter according to any of the claims 1 to 5, **characterized in that** the transistors of the second linear amplifier are P type semiconductors.

7. The three-phase inverter according to any of the claims 1 to 6, **characterized in that** each transistor of the second linear amplifier is in an OFF state or in a linear amplification state or in an ON state and only one transistor among the plural transistors of the second linear amplifier is in the linear amplification state during at least one period of time of the period of the full wave rectified sinus signal.

8. The three-phase inverter according to any of the claims 1 to 7, **characterized in that** the linear amplifiers comprise the same number of DC voltage sources as the number of transistors.
